# EUROPÄISCHE PATENTSCHRIFT

(11) **EP 0 633 978 B1**
(45) Veröffentlichungstag und Bekanntmachung des Hinweises auf die Patenterteilung: **16.12.1998**
(21) Anmeldenummer: 94905681.6
(22) Anmeldetag: 22.01.1994
(51) Int. Cl.: F01K 21/06, F01K 9/02

(54) **VERFAHREN UND VORRICHTUNG ZUM BETRIEB DES WASSER-DAMPF-KREISLAUFS EINES WÄRMEKRAFTWERKES**
PROCESS AND DEVICE FOR OPERATING THE WATER-STEAM CIRCUIT OF A THERMOELECTRIC POWER STATION
PROCEDE ET DISPOSITIF PERMETTANT DE FAIRE FONCTIONNER LE CIRCUIT EAU-VAPEUR D'UNE CENTRALE THERMO-ELECTRIQUE

(30) Priorität: 29.01.1993 DE 4302486
(43) Veröffentlichungstag der Anmeldung: 18.01.1995
(73) Patentinhaber: ABB PATENT GmbH, 68309 Mannheim (DE)
(72) Erfinder: RACHID, Nabil, D-68526 Ladenburg (DE)
(74) Vertreter: Rupprecht, Klaus, Dipl.-Ing.
(86) Internationale Anmeldenummer: EP9400167
(87) Internationale Veröffentlichungsnummer: WO9417286

(56) Entgegenhaltungen:
- FR-A- 2 404 103
- US-A- 5 215 448

## Beschreibung

Die Erfindung betrifft ein Verfahren zum Betrieb des Wasser-Dampf-Kreislaufes eines Wärmekraftwerkes, zum Beispiel ein Dampfkraftwerk, Heizkraftwerk oder Kombikraftwerk, mit einer Vorwärmstrecke für Kondensat, mit einem Dampferzeuger und mit einer Dampfturbine mit Kondensator und nachgeschalteter Kondensataufbereitung zur Reinigung des Kondensats mit wenigstens einer vorgeschalteten Kondensatpumpe, wobei das aufbereitete Kondensat in der Vorwärmstrecke mittels Anzapfdampf aus der Turbine und/oder aus einer Dampfzwischenüberhitzung beaufschlagt und hierdurch erwärmt wird, bevor es dem Dampferzeuger zugeführt wird sowie eine Vorrichtung zur Durchführung des Verfahrens.

Bei Wärmekraftwerken ist es allgemein bekannt, das zur Dampferzeugung vorgesehene Wasser aufzubereiten und in einer Vorwärmstrecke im Hinblick auf die im Dampferzeuger und der diesem nachgeschalteten Dampfturbine zugrundeliegenden Auslegungsdaten des Wärmekraftwerks vorzuwärmen. Damit ist gemeint, das als Kondensat bezeichnete, zur Verdampfung vorgesehene aufbereitete Wasser auf das am Dampferzeugereintritt erforderliche Druck- und Temperaturniveau anzuheben.

Ferner ist es bei Wärmekraftwerken allgemein üblich, daß die Vorwärmstrecke wenigstens einen Niederdruck (ND)-Vorwärmer, einen Speisewasserbehälter mit Entgaser sowie einen Hochdruck (HD)-Vorwärmer aufweist. Hierbei wird das aus dem Turbinenkondensator stammende Kondensat zunächst in einer Kondensataufbereitung, z. B. Kondensatreinigungsanlage, aufbereitet und mittels Kondensatpumpen durch die Niederdruck-Vorwärmer zum Speisewasserbehälter gefördert. Dort erfolgt die Entgasung des Kondensats, z. B. über Sprühentgasung, um Sauerstoff und Inertgase aus dem Kondensat zu entfernen. Im Zusammenwirken mit dieser Entgasung sowie aufgrund der mittels Anzapfdampf aus der Dampfturbine zugeführten Wärme, mit welcher das Kondensat beaufschlagt wird, herrscht im Speisewasserbehälter Siedezustand.

Die Aufheizung des Kondensats erfolgt an mehreren Stellen der Vorwärmstrecke zwecks Anhebung des Kondensats auf das erforderliche Druck- und Temperaturniveau, wobei die Anzapfstellen in der Dampfturbine auf die Einspeisestellen in der Vorwärmstrecke hinsichtlich Druck und Temperatur abgestimmt sind.

Der Speisewasserbehälter dient als Vorratsbehälter für Speisewasser, welches mittels Speisepumpen durch die Hochdruckvorwärmer dem Dampferzeuger zugeführt wird. Darüberhinaus ist es üblich, im Niederdruckbereich der Vorwärmstrecke einen Kondensatbehälter anzuordnen, der Kondensatverluste ausgleichen soll.

Der Speisewasserbehälter, die Vorwärmer sowie die verbindenden Rohrleitungen sind festigkeitsmäßig auf die jeweiligen Beanspruchungen auszulegen, was sich aufgrund der erforderlichen Werkstoffwahl und der damit verbundenen Verarbeitungsanforderungen nachhaltig auf die Fertigungskosten der Vorwärmstrecke auswirkt. Es ist daher ein allgemeines Bedürfnis bei Kraftwerksherstellern und -betreibern, Möglichkeiten zu finden, bzw. zu schaffen, die es gestatten, die Errichtungskosten für ein Wärmekraftwerk niedrig zu halten.

Aus der FR-A-2 404 103 ist ein Verfahren der eingangs beschriebenen Art zur Entternung von Verunreinigungen aus dem Kreislauf einer Dampfturbinenanlage bekannt, bei der ein Speisewasserbehälter nicht vorgesehen ist. Das bekannte Verfahren beruht darauf, daß das Kondensat eine dreisträngige Kondensatreinigungsanlage durchströmt, in welcher die Verunreinigungen entfernt werden.

Ausgehend von diesem Stand der Technik ist es Aufgabe der Erfindung ein Verfahren zum Betrieb eines Wärmekraftwerks anzugeben, aufgrunddessen die Errichtungs- und Betriebskosten eines Wärmekraftwerks verringert werden können ohne Beeinträchtigung der Betriebssicherheit und Verfügbarkeit. Ferner ist es Aufgabe eine entsprechende Vorrichtung zur Durchführung des Verfahrens zu schaffen.

Erfindungsgemäß besteht die Lösung der Aufgabe in den kennzeichnenden Merkmalen des Patentanspruchs 1. Demgemäß ist vorgesehen, daß das Kondensat vor Erreichen der Vorwärmstrecke einer Vorbehandlung unterzogen wird, bei der das aufbereitete Kondensat mit alkalischen Salzen sowie Sauerstoff beladen wird und daß das Kondensat unter Verzicht auf eine Entgasungsbehandlung ohne Durchführung von Entgasungsmaßnahmen dem Dampferzeuger zugeführt wird. Dabei erweist es sich dabei als vorteilhaft, das so behandelte Kondensat in einem Kondensatbehälter, der in der Vorwärmstrecke eingebunden ist, zu speichern.

Gemäß einer Besonderheit des erfindungsgemäßen Verfahrens kann ferner vorgesehen sein, daß in dem als "Frequenzstützung" bezeichneten Betriebszustand des Wärmekraftwerks, bei welchem die Turbine unter maximaler Dampfbeaufschlagung betrieben wird, insbesondere eine Dampfentnahme zur Aufheizung von kaltem Kondensat entfällt, ohne daß hierzu, wie bisher üblich, Absperrorgane in den Anzapfleitungen erforderlich sind. Zur Erzeugung der benötigten Dampfmenge in diesem Betriebszustand kann Kondensat aus dem Kondensatbehälter solange eingespeist werden, bis dieser geleert ist.

Eine Vorrichtung zur Durchführung des erfindungsgemäßen Verfahrens besitzt eine Vorwärmstrecke, einen Dampferzeuger sowie eine Dampfturbine mit einem Kondensator und nachgeschalteter Kondensataufbereitung.

Zur Lösung der zugrundeliegenden Aufgabe dienen die im Anspruch 4 gekennzeichneten Merkmale, das heißt, daß in der Kondensataufbereitung die Beladung mit alkalischen Salzen und Sauerstoff vorgesehen ist und daß die Vorwärmstrecke (20) wenigstens einen Niederdruck-Vorwärmer (18) und/oder Hochdruck-Vorwärmer (28) sowie wenigstens eine Speisepumpe (24) zur Einspeisung von Kondensat aus der Vorwärmstrecke (20) in den Dampferzeuger (30) aufweist.

In vorteilhafter Weiterbildung der Erfindung kann je nach räumlichen Möglichkeiten die Speisepumpe vor oder nach dem Vorwärmer bzw. bei Aufteilung in zwei Vorwärmergruppen dazwischen angeordnet sein. Vorteilhafterweise ist jedoch die Speisepumpe als Vorpumpe und als Hauptpumpe zweistufig ausgeführt, wobei entsprechend einer bevorzugten Ausgestaltung die Vorpumpe und die Hauptpumpe räumlich voneinander getrennt, z. B. vor und nach einem Vorwärmer, und von einem gemeinsamen Antriebsmotor beaufschlagt sind. Dies hat insbesondere den Vorteil, daß der Vorwärmer auf niedrigen Druck ausgelegt und somit kostengünstig gefertigt werden kann, während der hohe Einspeisedruck bei hoher Temperatur zur Einspeisung in den Dampferzeuger strömungsmäßig hinter dem Vorwärmer erzeugt wird.

In zweckmäßiger Weiterbildung der Erfindung kann ferner ein Kondensatbehälter als Speicher in die Vorwärmstrecke einbezogen sein, der als Vorlage für die Speisepumpe dient.

In vorteilhafter Weiterbildung der erfindungsgemäßen Vorrichtung ist der Kondensatbehälter zu Beginn der Vorwärmstrecke in diese eingebunden, da hier die Beanspruchungen aus Druck und Temperatur vergleichsweise niedrig sind und somit die Kosten für dessen Herstellung im Hinblick auf die geringeren Werkstoffanforderungen niedrig gehalten werden können.

Gemäß einer vorteilhaften Ausführungsform der Erfindung besitzt der Kondensatbehälter ein Druckpolster, das wahlweise von Dampf oder Stickstoff gebildet sein kann.

Als wesentlicher Vorteil des erfindungsgemäßen Verfahrens bzw. der zu dessen Durchführung vorgesehenen Vorrichtung besteht darin, daß sämtliche Komponenten der Vorwärmstrecke geringeren Beanspruchungen als seither üblich unterworfen sind und demgemäß kostengünstiger gefertigt werden können.

Als weiteres Ergebnis des erfindungsgemäßen Verfahrens kann die Kondensatreinigungsanlage, die nicht zur Vorwärmstrecke gezählt wird, auf niedrigem Druck ausgelegt werden, da der Druck in der anschließenden Vorwärmstrecke ebenfalls niedrig ist. Der zu Beginn der Vorwärmstrecke angeordnete Kondensatspeicher wird mit Hilfe von auch seither üblichen Hauptkondensatpumpen mit dem aufbereiteten Kondensat gespeist, welches zuvor in der Kondensatreinigungsanlage gereinigt wurde und anschließend in den Niederdruck-Vorwärmern, die mit Anzapfdampf aus der Niederdruck-Turbine bedampft werden, über nicht absperrbare Anzapfdampfstellen vorgewärmt ist. Der Kondensatspeicher nimmt Kondensat im nicht-siedenden Zustand auf und dient als Vorlagebehälter für die Speisepumpen. Wie bereits erwähnt, bestehen die Speisepumpen jeweils aus Vor- und Hauptpumpen, wobei die Vorpumpe gegenüber bisher üblichem Standard einfacher gestaltet sein kann, da ihr kein siedendes Wasser zufließt und ein Pumpenschutz gegen siedendes Wasser bei Druckabsenkung daher nicht erforderlich ist. Die Aufheizung des Kondensats auf die geforderte Endtemperatur entsprechend der Eintrittstemperatur am Dampferzeuger erfolgt stetig über Einspeiseleitungen mittels Anzapfdampf aus der Dampfturbine.

Der Enddruck der Vorpumpe ist vom Druckverlust des Vorwärmerstranges sowie vom zulässigen Eintrittsdruck der Speise-Hauptpumpe abhängig. Dieses Druckverhältnis kann dahingehend optimiert werden, daß in jedem Vorwärmer - wasserseitig - ein tieferer Druck als der jeweilige Anzapfdruck herrscht. Hierdurch kann die Turbinenschutzeinrichtung vereinfacht werden. Weiterhin können die üblichen, schnellen Eigenmedium gesteuerten Umführungsarmaturen der Hochdruck-Vorwärmer durch normale elektrisch angetriebene Armaturen ersetzt werden, wenn eine Umführung aus Verfügbarkeitsgründen noch erforderlich sein sollte. Ein weiterer Vorteil ergibt sich daraus, daß auch die Vorwärmer, die strömungsmäßig vor dem Dampferzeuger liegen, ebenfalls für niedrigen Druck, z. b. 16 bis 25 bar, anstelle von 200 bis 300 bar Nenndruck ausgelegt werden können.

Auch der Betriebszustand zur Frequenzstützung im Versorgungsnetz durch Steuerung der Anzapfung ist bei der erfindungsgemäßen Vorrichtung einfacher gestaltet und bietet darüberhinaus einen größeren Regelbereich abhängig von der Anzahl der Vorwärmerstufen in der Vorwärmstrecke.

Als letzter Vorteil ist darauf hinzuweisen, daß die Heizkondensate bis einschließlich Turbinen-Kondensator kaskadiert werden können und somit eine thermodynamisch günstigere Ausnutzung des Kraftwerksprozesses möglich ist. Infolge der hierdurch erreichbaren weiteren Absenkung der Kondensattemperatur ist somit eine 100 %-ige Speisewasserentsalzung in der Kondensatreinigungsanlage möglich. Um unkontrollierte Sauerstoffeinbrüche im Kondensatspeicher zu verhindern, dient ein Dampfpolster, welches bei Anlagen, bei denen Hilfsdampf aus fremder Quelle nicht verfügbar ist, durch ein Stickstoff-Polster vor dem Anfahren bzw. bis zum Wiederanfahren ersetzt werden kann.

Diese und weitere vorteilhafte Ausgestaltungen der Erfindung sind Gegenstand der Unteransprüche.

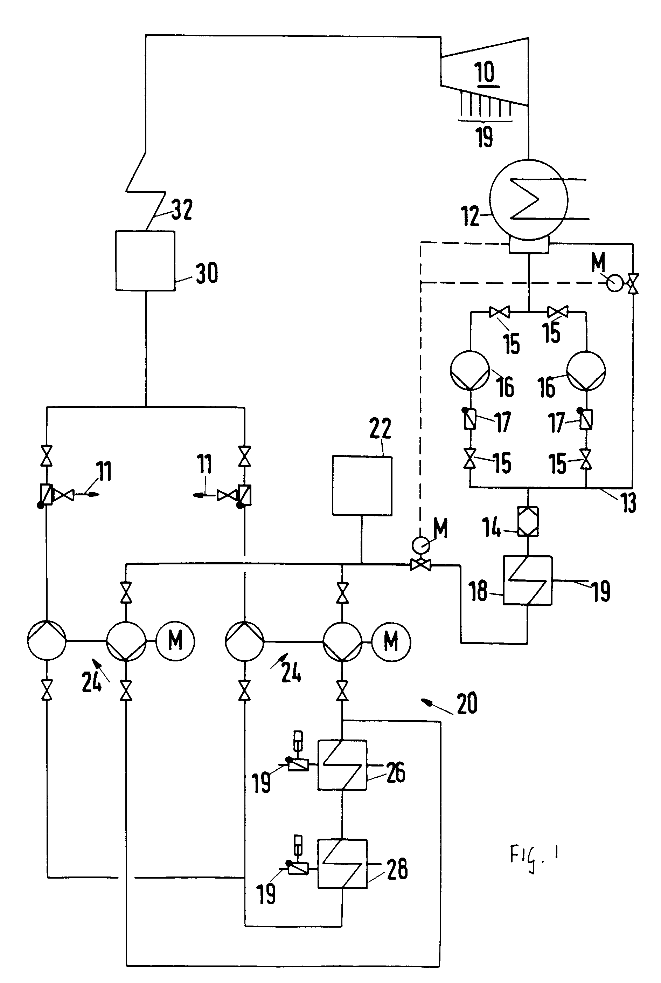

Anhand eines in der Zeichnung dargestellten Ausführungsbeispiels der erfindungsgemäßen Vorrichtung sollen die Erfindung, vorteilhafte Ausgestaltungen und besondere Vorteile der Erfindung näher erläutert und beschrieben werden.

Es zeigt die einzige Figur ein Schaltschema des Wasserdampfkreislaufes eines Wärmekraftwerks.

In der einzigen Figur ist ein gemäß der Erfindung gestaltetes Schaltschema des Wasser-Dampf-Kreislaufes eines Wärmekraftwerkes, wobei im Hinblick auf die Erfindung unwichtige Komponenten nicht näher dargestellt sind.

Am Ausgang einer herkömmlichen Dampfturbine 10 schließt ein Kondensator 12 an, dessen Kondensat in einer nachgeschalteten Kondensataufbereitungsanlage 14 gereinigt und vorbehandelt wird. Die Einspeisung der Kondensataufbereitungsanlage erfolgt zweisträngig, wobei jeder Strang eine Kondensathauptpumpe 16 sowie Absperrventile 15 sowie eine Rückschlagklappe 17 aufweist.

Ausgangsseitig ist die Kondensataufbereitungsanlage 14 mit einem ersten Vorwärmer 18 verbunden, der über eine Anzapfung 19 mit Dampf aus der Turbine 10 beaufschlagt ist. Eingangsseitig ist die Kondensataufbereitungsanlage 14 über eine Bypassleitung 13 direkt mit dem Kondensator 12 verbunden.

Mit dem ersten Vorwärmer 18 beginnt die sogenannte Vorwärmstrecke 20, welche ferner eine Speisepumpen 24, einen zweiten Vorwärmer 26 sowie einen dritten Vorwärmer 28 umfaßt. Der Kondensatspeicher 22 nimmt, wie der Name sagt, Kondensat auf und dient als Vorlage für die Speisepumpen 24, welche im gezeigten Schaltschema parallel zueinander geschaltet sind und die nachgeschalteten zweiten und dritten Vorwärmer versorgen, von wo das erwärmte Kondensat zum Dampferzeuger 30 mit nachfolgender Überhitzung 32 führt.

Anders als bei herkömmlichen Kraftwerken ist im vorliegenden erfindungsgemäßen Schaltschema auffällig, daß in der gesamten Vorwärmstrecke 20 weder ein Speisewasserbehälter noch ein Entgaser, der üblicherweise in den Speisewasserbehälter integriert ist, vorgesehen sind. Dies hat seinen Grund darin, daß das Kondensat in der Kondensataufbereitungsanlage 14 einer Vorbehandlung unterzogen wird, so daß eine Entgasung des erhitzten Kondensats nicht erforderlich ist.

Ein weiterer Unterschied gegenüber herkömmlichen Kraftwerken besteht darin, daß der Kondensatbehälter 22 nicht wie üblich der Kondensataufbereitung zugeordnet ist, sondern wie gezeigt, in die Vorwärmstrecke integriert ist.

In Strömungsrichtung hinter der Anschlußstelle des Kondensatspeichers 22 teilt sich die Vorwärmstrecke 20 in zwei parallele Stränge, die jeweils mit einer ersten Stufe der zweistufig ausgeführten Speisepumpe 24 ausgestattet sind. Hinter der ersten Stufe der Speisepumpe 24 sind die beiden Stränge wieder vereinigt und zu dem zweiten Vorwärmer 26 geführt, welchem der als dritte Vorwärmer 28 nachgeschaltet ist. In diesem Zusammenhang ist darauf hinzuweisen, daß das gesamte Druckniveau der Vorwärmstrecke insgesamt sehr niedrig angesetzt ist. Dies hat vornehmlich den Zweck, sowohl die vorgeschaltete Kondensataufbereitungsanlage 14 als auch die Komponenten der Vorwärmstrecke 20 diesem niedrigen Druck entsprechend auslegen zu können und als Resultat durch entsprechende Werkstoffwahl und Materialquerschnitte die Komponenten der Vorwärmstrecke 20 kostengünstig herstellen zu können. Dies gilt sowohl für die ersten und zweiten Vorwärmer 18, 26 als auch für den dritten Vorwärmer 28. Der dem Speisewasserdruck im herkömmlichen Wärmekraftwerken entsprechende Druck der Vorwärmstrecke wird erst durch die zweite Stufe der Speisepumpe 24 erzeugt, welche hinter dem dritten Vorwärmer 28 wieder in paralleler Anordnung jeweils mit Mindestmengenleitungen 11 geschaltet ist, die gemeinsam auf den Dampferzeuger 30 geführt sind.

Aufgrund des bewußt gewählten niedrigen Temperatur- und Druckniveaus wird erreicht, daß das im Kondensatspeicher befindliche Wasser sich im nicht siedenden Zustand befindet. Demgemäß müssen bei der Auslegung der ersten Stufe, der sogenannten Vorpumpe, der Speisepumpen 24 keine besonderen Vorkehrungen gegen siedendes Wasser bei Druckabsenkungen vorgesehen werden. Der Enddruck der Vorpumpe ist vom Druckverlust des Vorwärmerstranges sowie vom zulässigen Eintrittsdruck der zweiten Stufe der Speisepumpe abhängig.

Eine Besonderheit der dargestellten Kraftwerksschaltung besteht darin, daß für den Betriebszustand "Frequenzstützung" die Einspeisung der Vorwärmstrecke 20 aus der Kondensataufbereitungsanlage unterbrochen werden kann, so daß eine Dampfentnahme aus der Turbine zwecks Vorwärmung des zufließenden Kaltkondensats nicht erfolgt und zumindest für die Zeit, bis der Kondensatspeicher 22 geleert ist, die Dampfturbine 10 mit maximaler Wärmeleistung betrieben werden kann, ohne daß Kondensat nachströmt.

## Patentansprüche

1. Verfahren zum Betrieb des Wasser-Dampf-Kreislaufs eines Wärmekraftwerks mit einer Vorwärmstrecke (20) für Kondensat, mit einem Dampferzeuger (30) und mit einer Dampfturbine (10) mit Kondensator (12) und nachgeschalteter Kondensataufbereitung (14) sowie mit vorgeschalteten Kondensatpumpen (16), wobei das aufbereitete Kondensat in der Vorwärmstrecke (20) mittels Anzapfdampf aus der Dampfturbine (10) und/oder aus einer Dampfzwischenüberhitzung (32) beaufschlagt und hierdurch erwärmt wird, bevor es dem Dampferzeuger (30) zugeführt wird, dadurch gekennzeichnet, daß das Kondensat vor Erreichen der Vorwärmstrecke (20) einer Vorbehandlung unterzogen wird, indem das aufbereitete Kondensat mit alkalischen Salzen sowie Sauerstoff beladen wird, daß auf eine Entgasung des Kondensats verzichtet wird und daß das Kondensat ohne Durchführung von Entgasungsmaßnahmen dem Dampferzeuger (30) zugeführt wird.

2. Verfahren nach Anspruch 1, dadurch gekennzeichnet, daß das Kondensat in einem in die Vorwärmstrecke (20) eingebundenen Kondensatspeicher gespeichert wird.

3. Verfahren nach Anspruch 1 oder 2, dadurch gekennzeichnet, daß im Betriebszustand "Frequenzstützung" kein Kondensat in die Vorwärmstrecke (20) gefördert wird, so daß eine Dampfentnahme aus der Dampfturbine (10) zwecks Aufheizung von Kaltkondensat nicht erfolgt.

4. Wasser-Dampf-Kreislauf eines Wärmekraftwerkes zur Durchführung des Verfahrens nach einem der Ansprüche 1 bis 3 mit einer Vorwärmstrecke (20) für Kondensat, mit einem Dampferzeuger (30) und mit einer Dampfturbine (10) mit Kondensator (12) und nachgeschalteter Kondensatreinigung, wobei in der Kondensatreinigung eine Beladung mit alkalischen Salzen und mit Sauerstoff erfolgt, sowie mit wenigstens einer vorgeschalteten Kondensatpumpe (16), in welcher Vorwärmstrecke (20) wenigstens ein erster Vorwärmer (18) angeordnet ist, der wenigstens einer ersten Speisepumpe vorgeschaltet ist, sowie wenigstens ein weiterer, der wenigstens einen ersten Speisepumpe nachgeschalteter Vorwärmer (26, 28), dem wenigstens eine weitere Pumpe nachgeschaltet ist, die das erwärmte Kondensat ohne Entgasungsmaßnahme dem Dampferzeuger zuführt.

5. Wasser-Dampf-Kreislauf nach Anspruch 4, dadurch gekennzeichnet, daß die Speisepumpe (24) zweistufig ausgeführt ist und eine Vorpumpe und eine Hauptpumpe besitzt.

6. Wasser-Dampf-Kreislauf nach Anspruch 5, dadurch gekennzeichnet, daß die Vorpumpe und die Hauptpumpe räumlich voneinander getrennt mit einem gemeinsamen Antriebsmotor versehen sind.

7. Wasser-Dampf-Kreislauf nach einem der vorherigen Ansprüche 4 bis 6, dadurch gekennzeichnet, daß ein Kondensatspeicher (22) in die Vorwärmstrecke (20) eingebunden ist.

8. Wasser-Dampf-Kreislauf nach Anspruch 7, dadurch gekennzeichnet, daß der Kondensatspeicher (22) als Vorlage für die Speisepumpe (24) dient.

9. Wasser-Dampf-Kreislauf nach Anspruch 7 oder 8, dadurch gekennzeichnet, daß der Kondensatspeicher ein Druckpolster aufweist.

10. Wasser-Dampf-Kreislauf nach Anspruch 9, dadurch gekennzeichnet, daß das Druckpolster ein Dampfpolster ist.

11. Wasser-Dampf-Kreislauf nach Anspruch 9, dadurch gekennzeichnet, daß das Druckpolster ein Stickstoffpolster ist.

## Claims

1. A process for the operation of a water-steam circuit of a thermoelectric power station with a preheating section (20) for condensate, with a steam generator (30) and with a steam turbine (10) with a condenser (12) and a downstream condensate treatment unit (14) and with upstream condensate pumps (16), with the treated condensate being charged in the preheating section (20) by means of bleeder steam from the steam turbine (10) and/or from a steam reheating unit (32) and being heated in this way before it is supplied to the steam generator (30), characterized in that prior to reaching the preheating section (20) the condensate is subjected to a pretreatment in such a way that the treated condensate is charged with alkaline salts and oxygen, that a degasification of the condensate is omitted and that the condensate is supplied to the steam generator (30) without performing any degasification measures.

2. A process as claimed in claim 1, characterized in that the condensate is stored in a condensate storage means which is integrated in the preheating section (20).

3. A process as claimed in claim 1 or 2, characterized in that in the operating state of "frequency support" no condensate is conveyed to the preheating section (20), so that there is no steam withdrawal from the steam turbine (10) for the purpose of heating up cold condensate.

4. A water-steam circuit of a thermoelectric power station for performing the process as claimed in one of the claims 1 to 3 with a preheating section (20) for condensate, with a steam generator (30) and with a steam turbine (10) with condenser (12) and downstream condensate cleaning, with a charging with alkaline salts and with oxygen occurring in the condensate cleaning, and with at least one upstream condensate pump (16), in which preheating section (20) there is arranged at least one preheater (18), with at least a first feed pump being connected upstream thereof, and at least one further preheater (26, 28) which is provided downstream of at least one feed pump and is provided downstream with at least one further pump which supplies the heated condensate to the steam generator without any degasification measure.

5. A water-steam circuit as claimed in claim 4, characterized in that the feed pump (24) is arranged in two stages and comprises a fore-pump and a main pump.

6. A water-steam circuit as claimed in claim 5, characterized in that the fore-pump and the main pump are spatially separated from one another and are provided with a common drive motor.

7. A water-steam circuit as claimed in one of the preceding claims 4 to 6, characterized in that a condensate storage means (22) is integrated in the preheating section (20) .

8. A water-steam circuit as claimed in claim 7, characterized in that the condensate storage means (22) is used as a feed for the feed pump (24).

9. A water-steam circuit as claimed in claim 7 or 8, characterized in that the condensate storage means comprises a pressure cushion.

10. A water-steam circuit as claimed in claim 9, characterized in that the pressure cushion is a steam cushion.

11. A water-steam circuit as claimed in claim 9, characterized in that the pressure cushion is a nitrogen cushion.

## Revendications

1. Procédé pour faire fonctionner le circuit eau-vapeur d'une centrale thermoélectrique avec un circuit de préchauffe (20) pour le condensat, avec un générateur de vapeur (30) et avec une turbine à vapeur (10) dotée d'un condenseur (12) et d'une installation de traitement du condensat (14) montée en aval pour l'épuration et avec des pompes à condensat (16) montées en amont, le condensat traité étant exposé, dans le circuit de préchauffe (20), à de la vapeur prélevée dans la turbine (12) et/ou provenant d'un dispositif de surchauffe intermédiaire de la vapeur (32), et ainsi réchauffé avant d'être amené au générateur de vapeur (30), caractérisé en ce que le condensat, avant d'atteindre le circuit de préchauffe (20), est soumis à un traitement préalable au cours duquel le condensat traité est chargé de sels alcalins et d'oxygène, et que le condensat est amené au générateur de vapeur (30) sans mise en oeuvre de mesures de dégazage.

2. Procédé selon la revendication 1, caractérisé en ce que le condensat est stocké dans un réservoir de condensat intégré dans le circuit de préchauffe (20).

3. Procédé selon la revendication 1 ou 2, caractérisé en ce que dans le mode de fonctionnement en « appui de fréquence », le condensat n'est pas amené au circuit de préchauffe (2), de sorte qu'il n'y a pas de prélèvement de vapeur dans la turbine à vapeur (10) pour chauffer le condensat froid.

4. Circuit eau-vapeur d'une centrale thermoélectrique permettant la mise en oeuvre du procédé selon l'une quelconque des revendications 1 à 3, avec un circuit de préchauffe (20) pour le condensat, avec un générateur de vapeur (30) et avec une turbine à vapeur (10) dotée d'un condenseur (12) et d'une installation de traitement du condensat montée en aval pour l'épuration, l'installation d'épuration du condensat réalisant un apport de sels alcalins et d'oxygène, avec au moins une pompe à condensat (16) montée en amont, un premier préchauffeur (18) au moins étant disposé dans le circuit de préchauffe (20) et montré en amont d'au moins une première pompe d'alimentation, et au moins un autre préchauffeur (26, 28) étant monté en aval de la première pompe d'alimentation au nombre d'une au moins et étant suivi d'une autre pompe qui amène le condensat au générateur de vapeur sans mise en oeuvre de mesures de dégazage.

5. Circuit eau-vapeur selon la revendication 4, caractérisé en ce que la pompe d'alimentation (24) est conçue en deux niveaux et comprend une pompe d'amont et une pompe principale.

6. Circuit eau-vapeur selon la revendication 5, caractérisée en ce que la pompe d'amont et la pompe principale sont séparées l'une de l'autre dans l'espace et pourvues d'un moteur d'entraînement commun.

7. Circuit eau-vapeur selon l'une quelconque des revendications 4 à 6, caractérisé en ce qu'un réservoir de condensat (22) est intégré dans le circuit de préchauffe (20).

8. Circuit eau-vapeur selon la revendication 7, caractérisé en ce que le réservoir de condensat (22) sert de réserve pour la pompe d'alimentation (24).

9. Circuit eau-vapeur selon la revendication 7 ou 8, caractérisé en ce que le réservoir de condensat présente une couche de gaz sous pression protectrice.

10. Circuit eau-vapeur selon la revendication 9, caractérisé en ce que la couche de gaz sous pression protectrice est une couche de vapeur.

11. Circuit eau-vapeur selon la revendication 9, caractérisé en ce que la couche de gaz sous pression protectrice est une couche d'azote.
